(19) Europäisches Patentamt
European Patent Office
Office européen des brevets

(11) Veröffentlichungsnummer: **0 014 307**
**A1**

(12) # EUROPÄISCHE PATENTANMELDUNG

(21) Anmeldenummer: **80100027.4**

(22) Anmeldetag: **04.01.80**

(51) Int. Cl.³: **C 07 F 9/40**
C 07 F 9/32, C 07 F 9/38
C 07 F 9/53, H 01 S 3/20
D 06 L 3/12

(30) Priorität: **16.01.79 DE 2901480**

(43) Veröffentlichungstag der Anmeldung:
**20.08.80 Patentblatt 80/17**

(84) Benannte Vertragsstaaten:
**CH DE FR GB**

(71) Anmelder: **BAYER AG**
**Zentralbereich Patente, Marken und Lizenzen**
**D-5090 Leverkusen 1, Bayerwerk(DE)**

(72) Erfinder: **Eckstein, Udo, Dr.**
**Morgengraben 2**
**D-5000 Köln 80(DE)**

(72) Erfinder: **Brinkwerth, Wolfgang, Dr.**
**Sanderstrasse 89a**
**D-5060 Bergisch-Gladbach 2(DE)**

(72) Erfinder: **Siegel, Edgar, Dr.**
**Am Kiesberg 4**
**D-5090 Leverkusen 1(DE)**

(54) **1,4-Bis-(styryl)-benzolderivate sowie deren Herstellung und Verwendung als Weisstöner und Laserfarbstoffe.**

(57) 1,4-Distyrylbenzolderivate der Formel

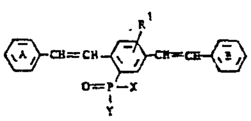

worin
$R^1$ für Wasserstoff, Halogen, Alkyl, Alkoxy oder einen Rest der Formel

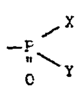

steht und
X und Y Halogen, Alkyl, Aryl, Aralkyl, Hydroxy, Alkoxy, Aralkoxy, Cycloalkoxy u.a. bedeuten, und
wobei die Ringe A and B übliche Substituenten tragen können, eignen sich vorzüglich zum Weißtönen von organischen Polymeren, insbesondere Polyesterfasern, da sie sich durch gute Hitzebeständigkeit und Lichtechtheit auszeichnen.

EP 0 014 307 A1

BAYER AKTIENGESELLSCHAFT 5090 Leverkusen, Bayerwerk
Zentralbereich K/lz
Patente, Marken und Lizenzen

# 1,4-Bis-(styryl)-benzolderivate sowie deren Herstellung und Verwendung als Weißtöner und Laserfarbstoffe

Die Erfindung betrifft phosphono-, phosphonyl- und phosphinylsubstituierte 1,4-Di-(styryl)-benzolderivate, Verfahren zu deren Herstellung sowie deren Verwendung als Weißtöner und als Laserfarbstoffe.

Die neuen Verbindungen entsprechen der Formel

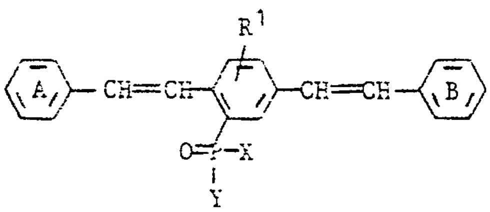 I,

worin

$R^1$ für Wasserstoff, Halogen, Alkyl, Alkoxy, Carboxy, Cyano, Sulfo oder einen Rest der Formel

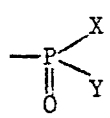

steht und

X und Y unabhängig voneinander Halogen, Alkyl, Alkenyl, Aryl, Aralkyl, Hydroxy, Alkoxy, Aralkoxy, Cycloalkoxy, Aryloxy, Amino, Mono- oder Dialkylamino, Aralkylamino, Acylamino, Arylamino, Cycloalkylamino, Morpholino, Piperidino oder Pyrrolidino bedeuten,

und wobei die cyclischen und acyclischen Reste sowie die Ringe A und B für Weißtöner übliche, nichtchromophore Substituenten tragen können.

Die Phosphonsäure- bzw. Phosphinsäuregruppen können auch als Salze vorliegen.

Nicht-chromophore Substituenten sind beispielsweise Halogen, gegebenenfalls substituiertes Alkyl, gegebenenfalls substituiertes Alkenyl, Aryl, Aralkyl, gegebenenfalls substituiertes Alkoxy, Alkoxycarbonyl, gegebenenfalls substituiertes Aminocarbonyl, Cyan, Sulfo, Alkylsulfonyl, Arylsulfonyl, gegebenenfalls substituiertes Aminosulfonyl, Acyl, Acylamino, Hydroxy, Aryloxy, Aralkyloxy, Alkenyloxy, Carboxy oder Acyloxy.

Alkyl ist insbesondere $C_1$- bis $C_4$-Alkyl, das durch Hydroxy, $C_1$- bis $C_4$-Alkoxy, Cyan, Carboxy, $C_1$- bis $C_4$-Alkoxycarbonyl, Aminocarbonyl, Chlor oder Brom monosubstituiert sein kann, oder Trifluormethyl.

Alkenyl ist insbesondere $C_2$- bis $C_5$-Alkenyl, das durch Hydroxy, $C_1$- bis $C_4$-Alkoxy, Cyan, Carboxy, $C_1$- bis $C_4$-Alkoxycarbonyl, Chlor oder Brom monosubstituiert sein kann. Bevorzugt sind Vinyl und Allyl.

Halogen ist insbesondere Fluor, Chlor und Brom, vorzugsweise Chlor.

Aryl ist insbesondere gegebenenfalls durch $C_1$- bis $C_4$-Alkyl, Trifluormethyl, Chlor, Brom, Carboxy, Cyan, $C_1$- bis $C_4$-Alkoxycarbonyl, $C_1$- bis $C_4$-Alkylsulfonyl oder $C_1$- bis $C_4$-Alkoxy substituiertes Phenyl.

Aralkyl ist insbesondere Phenyl-$C_1$- bis $C_4$-alkyl, das im Phenylkern noch durch Chlor, Methyl oder Methoxy substituiert sein kann.

Alkoxy ist insbesondere $C_1$- bis $C_4$-Alkoxy oder ein Rest der Formel

$$-(OCH_2-CH_2)_m-OQ \quad ,$$

wobei

Q Wasserstoff oder $C_1$- bis $C_4$-Alkyl und

m eine ganze Zahl von 1 bis 20 bedeuten.

Cycloalkoxy bzw. Cycloalkylamino sind insbesondere Cyclopentyloxy, Cyclopentylamino, Cyclohexyloxy und Cyclohexylamino.

Acyl ist insbesondere $C_1$- bis $C_4$-Alkylcarbonyl, $C_1$- bis $C_4$-Alkoxycarbonyl, $C_1$- bis $C_4$-Alkylsulfonyl, $C_1$- bis $C_4$-Alkoxysulfonyl, gegebenenfalls durch Methyl, Methoxy oder Chlor substituiertes Benzoyl, gegebenenfalls durch Methyl, Methoxy oder Chlor substituiertes Benzolsulfonyl, gegebenenfalls durch Methyl, Methoxy oder Chlor substituiertes Phenyl-$C_1$- bis $C_4$-alkoxycarbonyl oder gegebenenfalls durch Methyl, Methoxy oder Chlor substituiertes Phenoxycarbonyl.

Als Substituenten der Aminocarbonyl- und Aminosulfonylreste kommen insbesondere $C_1$- bis $C_4$-Alkyl, gegebenenfalls durch Methyl, Methoxy oder Chlor substituiertes Phenyl oder Phenyl-$C_1$- bis $C_4$-alkyl in Frage.

Bevorzugte Verbindungen entsprechen der Formel

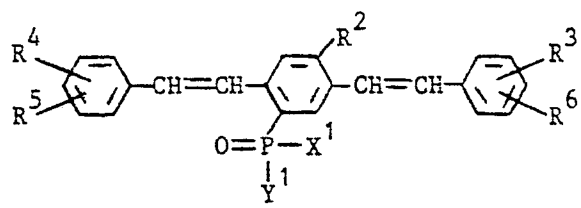 II,

worin

$R^2$ Wasserstoff, Chlor, $C_1$- bis $C_4$-Alkyl, $C_1$- bis $C_4$-Alkoxy oder einen Rest der Formel 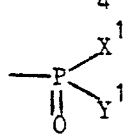 ,

$R^3$ und $R^4$ unabhängig voneinander Wasserstoff, Chlor, $C_1$- bis $C_4$-Alkyl, Sulfo, Carboxy, $C_1$- bis $C_4$-Alkoxy, $C_1$- bis $C_4$-Alkoxycarbonyl

oder Cyano,

$R^5$ und $R^6$ unabhängig voneinander Wasserstoff, Chlor, $C_1$- bis $C_4$-Alkyl, gegebenenfalls durch Methyl, Methoxy oder Chlor substituiertes Phenyl, $C_1$- bis $C_4$-Alkoxy, $C_1$- bis $C_4$-Alkoxycarbonyl, $C_1$- bis $C_4$-Alkylsulfonyl, $C_1$- bis $C_4$-Alkylcarbonyl, Hydroxy oder Carboxy,

$X^1$ und $Y^1$ unabhängig voneinander $C_1$- bis $C_4$-Alkyl, Benzyl, gegebenenfalls durch Methyl, Methoxy oder Chlor substituiertes Phenyl, eine Gruppe der Formeln -OH oder $OR^7$, oder einen Rest der Formel $-(OCH_2CH_2)_n-OR^7$,

$R^7$ Wasserstoff, $C_1$- bis $C_4$-Alkyl, Benzyl oder Phenyl und

n eine ganze Zahl von 1 bis 7 bedeuten,

wobei die Phosphonsäure- bzw. Phosphinsäuregruppe auch als Salz vorliegen kann. Bevorzugt sind wasserlösliche Salze, wie die Alkali- und gegebenenfalls substituierten Ammoniumsalze.

Besonders wertvolle Verbindungen entsprechen der Formel

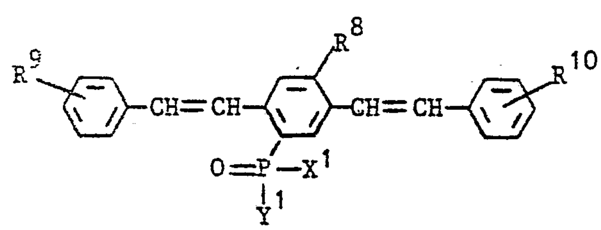

III,

worin

$R^8$ Wasserstoff, Chlor oder einen Rest der Formel

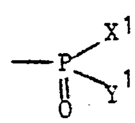

$R^9$ und $R^{10}$ Wasserstoff, Chlor, $C_1$- bis $C_4$-Alkyl, Sulfo, Carboxy, $C_1$- bis $C_4$-Alkoxy, $C_1$- bis $C_4$-Alkoxycarbonyl oder Cyan bedeuten und

$X^1$ und $Y^1$ die vorstehend genannte Bedeutung haben.

Die Distyrylverbindungen der Formel I können nach an sich bekannten Methoden* dadurch hergestellt werden, daß man die Verbindung der Formel

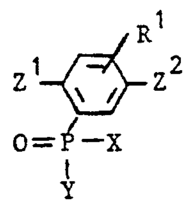 IV

im molaren Verhältnis 1:1:1 mit je einer Verbindung der Formeln

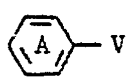 Va bzw. 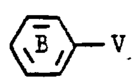 Vb

umsetzt, wobei die Symbole $Z^1$, $Z^2$ bzw. V eine Formylgruppe oder eine Gruppierung der Formeln

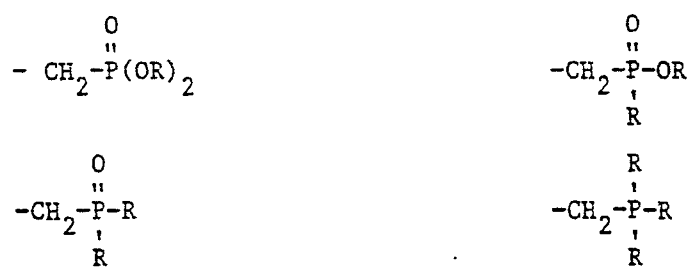

darstellen, wobei

R einen $C_1$- bis $C_4$-Alkyl, einen $C_5$- bis $C_6$-Cycloalkyl oder einen gegebenenfalls weiter substituierten Arylrest, vorvorzugsweise einen Phenylrest, bedeutet.

Auf diese Weise können symmetrische und unsymmetrische Verbindungen und Gemische aus symmetrischen und unsymmetrischen Verbindungen hergestellt werden.

* z.B. wie in US-Ps 3177208 beschrieben

Demgemäß kann man beispielsweise Dialdehyde der Formel

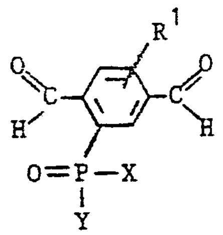 VI

mit monofunktionellen Verbindungen der Formeln

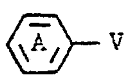 VIIa bzw. 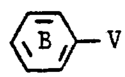 VIIb

oder Monoaldehyde der Formeln

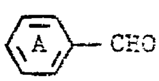 VIIIa bzw. 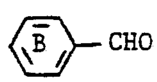 VIIIb

mit bifunktionellen Verbindungen der Formel

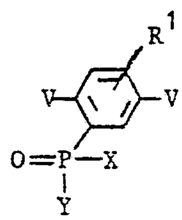 IX

umsetzen, wobei

V $-CH_2-\overset{\overset{O}{\|}}{P}-(OR)_2$, $-CH_2-\underset{R}{\overset{\overset{O}{\|}}{P}}-OR$, $-CH_2-\overset{\overset{O}{\|}}{P}-(R)_2$ oder $-CH_2-P(R)_3$

bedeutet und

die Ringe A und B sowie R und $R^1$ die angegebene Bedeutung haben.

Die verwendeten Aldehyde der Formeln VI, VIIIa und VIIIb lassen sich nach an sich bekannten Methoden (z. B. mit Hilfe der Sommelet-Reaktion) herstellen.

Die hierbei als Ausgangsstoffe benötigten Phosphorverbindungen der Formeln VIIa, VIIb und IX werden erhalten, indem man Halogenmethylverbindungen, vorzugsweise Chlormethyl- oder Brommethylverbindungen der Formeln

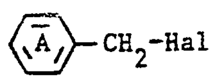 Xa bzw. 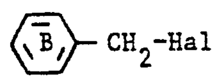 Xb

und

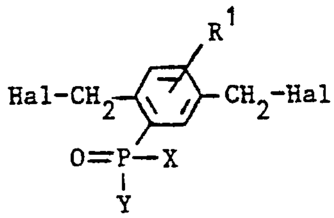 XI

mit Phosphorverbindungen $P(OR)_3$, $R-P(OR)_2$, $RO-P(R)_2$ oder $P(R)_3$ umsetzt, wobei R die angegebene Bedeutung hat. Vorzugsweise bedeutet R an Sauerstoff gebunden $C_1$- bis $C_4$-Alkyl, an Phosphor gebunden dagegen Phenyl.

Zur Herstellung der Endstoffe kondensiert man die entsprechenden Komponenten in Gegenwart basischer Kondensationsmittel in organischen Lösungsmitteln.

Als Lösungsmittel wählt man vorteilhaft indifferente Lösungsmittel, beispielsweise Kohlenwasserstoffe wie Toluol oder Xylol oder Alkohole wie Methanol, Äthanol, Isopropanol, Butanol, Glykol, Glykoläther wie 2-Methoxyäthanol, Hexanol, Cyclohexanol, Cyclooctanol, ferner Äther wie Diisopropyläther, Dioxan, Tetrahydrofuran; weiterhin Formamide, N-Methylpyrrolidon, Dimethylsulfoxid und Phosphorsäureamide. Bevorzugt sind Dimethylformamid, Dimethylacetamid und Phosphorsäure-tris-dialkylamide, wobei Alkyl insbesondere $C_1$- bis $C_4$-Alkyl ist.

Als Kondensationsmittel kommen stark basische Verbindungen in Betracht, wie Alkali- oder Erdalkalimetallhydroxide, Alkali- oder Erdalkaliamide und Alkali- oder Erdalkalimetallalkoholate, beispielsweise Kaliumhydroxid, Natriumhydroxid, Kalium-tert.-butylat, Natriumamid oder Natriummethylat, ferner die Alkaliverbindungen des Dimethylsulfoxids und Alkalihydride sowie gegebenenfalls Alkalimetalldispersionen.

Man arbeitet bevorzugt im Temperaturbereich von 0 bis 120°C.

Die erfindungsgemäßen Verbindungen I werden ebenfalls erhalten, wenn man die entsprechenden Aldehydanile in einem dipolar aprotischen Lösungsmittel, wie Dimethylformamid, in Gegenwart von basischen Kondensationsmitteln mit den entsprechenden Methylverbindungen umsetzt.

An den Reaktionsprodukten der vorstehenden Verfahren können noch weitere, an sich bekannte Umwandlungen vorgenommen werden, wie Halogenierungen, funktionelle Abwandlungen von Carboxylgruppen, Einführung von Chlormethylgruppen oder Austausch von Halogenatomen gegen Cyanogruppen.

Die Verbindungen der Formel I zeigen im gelösten oder fein verteilten Zustand eine sehr starke blaue Fluoreszenz. Sie eignen sich einzeln oder als Mischungen zum Weißtönen der verschiedensten synthetischen, halbsynthetischen oder natürlichen organischen Materialien.

Besonders geeignet sind die neuen Phosphonsäureester-Gruppen enthaltenden Verbindungen der Formel I zum Weißtönen von synthetischen organischen Fasermaterialien auf der Basis von Polyestern, von Kunststoffen wie Weich-PVC, Polyäthylen und Polypropylen. Auch Latices aus Acrylestern, Polyvinylestern und Polystyrolen lassen sich gut aufhellen.

Andererseits eignen sich die Verbindungen der Formel I, die Phosphonsäuregruppen enthalten, für das Weißtönen von Baumwolle, Cellulose und Polyamiden aus Waschflotten. Sie weisen gegenüber vergleichbaren Verbindungen Vorteile im Weißgrad, in der Lichtechtheit und in der Wasserlöslichkeit auf.

Verbindungen der Formel I sind mit ihrer großen Quantenausbeute und hohen Lichtechtheit weiterhin verwendbar als durchstimmbare Farbstofflaser im blauen Spektralbereich von 400 - 480 nm. Zu diesem Zweck werden sie in der Anordnung eingesetzt wie sie die DE-OS 1 91o 784 bzw. GB-PS 1255399 beschreiben.

Für ihre verschiedenartigste Verwendung als Aufheller seien beipielsweise, ohne daß durch die nachfolgende Übersicht irgendeine Beschränkung hierauf ausgedrückt werden soll,die folgenden Gruppen von organischen Materialien, soweit eine optische Aufhellung derselben in Betracht kommt, genannt:

I.

Synthetische organische hochmolekulare Materialien:

a) Polymerisationsprodukte auf Basis mindestens eine polymerisierbare Kohlenstoff-Kohlenstoff-Doppelbindung enthaltender organischer Verbindungen, d. h. deren Homo- oder Copolymerisate sowie deren Nachbehandlungsprodukte, wie beispielsweise Vernetzungs-, Pfropfungs- oder Abbauprodukte, Polymerisat-Verschnitte usw., wofür beispielsweise genannt seien:
Polymerisate auf Basis von α,β-ungesättigten Carbonsäuren, insbesondere von Acrylverbindungen (wie. z. B. Acrylestern, Acrylsäuren, Acrylnitril, Acrylamiden und deren Derivaten oder deren Methacryl-Analoga), von Olefin-Kohlenwasserstoffen (wie z. B. Äthylen, Propylen, Isobutylen, Styrole, Diene wie besonders Butadien, Isopren, d.h. also auch Kautschuke und kautschukähnliche Polymerisate, ferner sogenannte ABS-Polymerisate), Polymerisate auf Basis von Vinyl- und Vinyliden-Verbindungen (wie z.B. Vinylester, Vinylchlorid, Vinylsulfonsäure, Vinyläther, Vinylalkohol, Vinylidenchlorid, Vinylcarbazol), von halogenierten Kohlenwasserstoffen (Chloropren, nachhalogenierte Äthylene), von ungesättigten Aldehyden und Ketonen (z.B. Acrolein usw.), von Allylverbindungen usw.,Pfropfpolymerisationsprodukte (z.B. durch Aufpfropfen von Vinylmonomeren), Vernetzungsprodukte, die beispielsweise mittels bi- oder mehrfunktionellen Vernetzern wie Divinylbenzol, mehrfunktionelle Allylverbindungen oder Bisacrylverbindungen oder die durch partiellen Abbau (Hydrolyse, Depolymerisation) oder Modifizierung reaktiver Gruppierungen (z.B. Veresterung, Verätherung, Halogenierung, Selbstvernetzung) erhältlich sind.

b) Andere Polymerisationsprodukte, die z. B. durch Ringöffnung erhältlich sind, beispielsweise Polyamide vom Polycaprolactam-Typ; ferner Formaldehyd-Polymerisate oder Polymere, die sowohl über Polyaddition als auch Polykondensation erhältlich sind, wie Polyäther, Polythioäther,Polyacetale, Thioplaste.

c) Polykondensationsprodukte oder Vorkondensate auf Basis von bi- oder polyfunktionellen Verbindungen mit kondensationsfähigen Gruppen, deren Homo- und Mischkondensationsprodukte sowie Produkte der Nachbehandlung, wofür beispielsweise genannt seien:

Polyester, gesättigte (z. B. Polyäthylen-terephthalat) oder ungesättigte (z.B. Maleinsäure-Dialkohol-Polykondensate sowie deren Vernetzungsprodukte mit anpolymerisierbaren Vinylmonomeren), unverzweigte sowie verzweigte (auch auf Basis höherwertiger Alkohole, wie z.B. Alkydharze), Polyamide (z.B. Hexamethylendiamin-adipat), Maleinatharze, Melaminharze, Phenolharze, Anilinharze, Furanharze, Carbamidharze bzw. auch deren Vorkondensate und analog gebaute Produkte, Polycarbonate, Silikonharze und andere.

d) Polyadditionsprodukte wie Polyurethane (vernetzt und unvernetzt), Epoxidharze.

II.

Halbsynthetische organische Materialien, wie z.B. Celluloseester bzw. Mischester (Acetat, Propionat), Nitrocellulose, Celluloseäther, regenerierte Cellulose (Viskose, Kupferammoniak-Cellulose) oder deren Nachbehandlungsprodukte, Casein-Kunststoffe.

III.

Natürliche organische Materialien animalischen oder vegetabilischen Ursprungs, beispielsweise auf Basis von Cellulose oder Proteinen, wie Wolle, Baumwolle, Seide, Bast, Jute, Hanf, Felle und Haare, Leder, Holzmassen in feiner Verteilung, Naturharze (wie Kolophonium, insbesondere Lackharzen), ferner Kautschuk, Guttapercha, Balata, sowie deren Nachbehandlungs- und Modifizierungsprodukte (z.B. durch Härtung, Vernetzung oder Pfropfung), Abbauprodukte (z.B. durch Hydrolyse, Depolymerisation), durch Abwandlung reaktionsfähiger Gruppen erhältliche Produkte (z.B. durch Acylierung, Halogenierung, Vernetzung usw.).

Die in Betracht kommenden organischen Materialien können in den verschiedenartigsten Verarbeitungszuständen (Rohstoffe, Halbfabrikate oder Fertigfabrikate) und Aggregatzuständen vorliegen. Sie können einmal in Form der verschiedenartigsten geformten Gebilde vorliegen, d. h. also z.B. vorwiegend dreidimensional ausgedehnte Körper wie Blöcke, Platten, Profile, Rohre, Spritzgußformlinge oder verschiedenartigste Werkstücke, Schnitzel oder Granulate, Schaumstoffe; vorwiegend zweidimensional ausgebildete Körper wie Filme, Folien, Lacke, Bänder, Überzüge, Imprägnierungen und Beschichtungen oder vorwiegend eindimensional ausgebildete Körper wie Fäden, Fasern, Flocken, Borsten, Drähte. Die besagten Materialien können andererseits auch in ungeformten Zuständen in den verschiedenartigsten homogenen und inhomogenen Verteilungsformen und Aggregatzuständen vorliegen, z. B. als Pulver, Lösungen, Emulsionen, Dispersionen, Latices (Beipiele: Lacklösungen, Polymerisat-Dispersionen, Sole, Gelee, Kitte, Wachse, Kleb- und Spachtelmassen usw.).

Fasermaterialien können beispielsweise als endlose Fäden, Stapelfasern, Flocken, Strangware, textile Fäden, Garne, Zwirne, Faservliese, Filze, Watten, Beflockungs-Gebilde oder als textile Gewebe oder textile Verbundstoffe, Gewirke sowie als Papier, Pappen oder Papiermassen usw. vorliegen.

Den erfindungsgemäß anzuwendenden Verbindungen kommt auch Bedeutung für die Behandlung von textilen organischen Materialien, insbesondere textilen Geweben, zu. Sofern Fasern, welche als Stapelfasern oder endlose Fasern, in Form von Strängen, Geweben, Gewirken, Vliesen, beflockten Substraten oder Verbundstoffen vorliegen können, erfindungsgemäß weiß zu tönen sind, so geschieht dies mit Vorteil in wäßrigem Medium, worin die betreffenden Verbindungen in feinverteilter Form (Suspension, gegebenenfalls Lösung) vorliegen. Gegebenenfalls können bei der Behandlung

Dispergiermittel zugesetzt werden, wie z.B. Seifen, Polyglykoläther von Fettalkoholen, Fettaminen oder Alkylphenolen, Cellulosesulfitablaugen oder Kondensationsprodukte von gegebenenfalls alkylierten Naphthalinsulfonsäuren mit Formaldehyd. Als besonders zweckmäßig erweist es sich, in neutralem, schwach alkalischem oder saurem Bade zu arbeiten. Ebenso ist es vorteilhaft, wenn die Behandlung bei erhöhten Temperaturen von 50 bis 100°C, beispielsweise bei Siedetemperatur des Bades oder in deren Nähe (etwa 90°C) erfolgt. Für die erfindungsgemäße Veredelung kommen auch Lösungen in organischen Lösungsmitteln in Betracht, wie dies in der Färbereipraxis in der sogenannten Lösungsmittelfärberei (Foulard-Thermofixierapplikation, Ausziehfärbeverfahren in Trommelfärbemaschinen) beispielsweise für Polyamid- und Polyester-Substrate praktiziert wird.

Die erfindungsgemäß zu verwendenden neuen Weißtöner können ferner den Materialien vor oder während deren Verformungen zugesetzt bzw. einverleibt werden. So kann man sie beispielsweise bei der Herstellung von Filmen, Folien, Bändern oder Formkörpern der Preßmasse oder Spritzgußmasse beifügen oder vor dem Verspinnen in der Spinnmasse lösen, dispergieren oder anderweitig für eine homogene Feinverteilung sorgen. Die Weißtöner können auch den Ausgangssubstanzen, Reaktionsgemischen oder Zwischenprodukten zur Herstellung voll- oder halbsynthetischer organischer Materialien zugesetzt werden, also auch vor oder während der chemischen Umsetzung, beispielsweise bei einer Polykondensation (also auch Vorkondensaten), bei einer Polymerisation (also auch Präpolymeren) oder einer Polyaddition.

Die neuen Weißtöner werden selbstverständlich auch überall dort eingesetzt, wo organische Materialien der oben angedeuteten Art mit anorganischen Materialien in irgendeiner Form kombiniert werden (typische Beispiele: Waschmittel, Weißpigmente in organischen Substanzen).

Die neuen weißtönenden Substanzen zeichnen sich durch besonders gute Hitzebeständigkeit, Lichtechtheit und Migrierbeständigkeit aus.

Die Menge der erfindungsgemäß zu verwendenden neuen Weißtöner, bezogen auf das weiß zu tönende Material, kann in weiten Grenzen schwanken. Schon mit sehr geringen Mengen, in gewissen Fällen z.B. solchen von 0,001 Gew.-%, kann ein deutlicher und haltbarer Effekt erzielt werden. Es können aber auch Mengen bis zu etwa 0,5 Gew.-% und mehr zur Anwendung gelangen. Für die meisten praktischen Belange sind vorzugsweise Mengen zwischen 0,01 und 0,2 Gew.-% von Interesse.

Die neuen als Weißtöner dienenden Verbindungen können beispielsweise auch wie folgt eingesetzt werden:

a) In Mischungen mit Farbstoffen oder Pigmenten oder als Zusatz zu Färbebädern, Druck-, Ätz- oder Reservepasten; ferner auch zur Nachbehandlung von Färbungen, Drucken oder Ätzdrucken.

b) In Mischung mit sogenannten "Carriern", Antioxydantien, Lichtschutzmitteln, Hitzestabilisatoren, chemischen Bleichmitteln oder als Zusatz zu Bleichbädern.

c) In Mischung mit Vernetzern, Appreturmitteln wie Stärke oder synthetisch zugänglichen Appreturen. Die erfindungsgemäßen Erzeugnisse können vorteilhaft auch den zur Erzielung einer knitterfesten Ausrüstung benutzten Flotten zugesetzt werden.

d) In Kombination mit Waschmitteln. Die Waschmittel und Aufhellermittel können den zu benutzenden Waschbädern getrennt zugefügt werden. Es ist auch vorteilhaft, Waschmittel zu verwenden, die die Weißtöner beigemischt enthalten. Als Waschmittel eignen sich beispielsweise Seifen, Salze von Sulfonatwaschmitteln, wie z.B. von sulfonierten am 2-Kohlenstoffatom durch höhere Alkylreste substituierten Benzimidazolen, ferner Salze von Monocarbonsäureestern der 4-Sulfophthalsäure mit höheren Fettalkoholen, weiterhin Salze von Fettalkoholsulfonaten, Alkylarylsulfonsäuren oder Kondensationsprodukten von höheren Fettsäuren mit aliphatischen Oxy- oder Aminosulfonsäuren. Ferner können nicht-ionogene Waschmittel herangezogen werden, z.B. Polyglykoläther, die sich von Äthylenoxid und höheren Fettalkoholen, Alkylphenolen oder Fettaminen ableiten.

e) In Kombination mit polymeren Trägermaterialien (Polymerisations-, Polykondensations- oder Polyadditionsprodukten), in welchen die Weißtöner gegebenenfalls neben anderen Substanzen in gelöster oder dispergierter Form eingelagert sind, z.B. bei Beschichtungs-, Imprägnier- oder Bindemitteln (Lösungen, Dispersionen, Emulsionen), Textilien, Vliesen, Papier, Leder.

f) Als Zusätze zu den verschiedensten industriellen Produkten, um dieselben marktfähiger zu machen oder Nachteile in der Gebrauchsfähigkeit zu vermeiden, z.B. als Zusatz zu Leimen, Klebemitteln, Zahnpasten, Anstrichstoffen.

g) In Kombination mit anderen weißtönend wirkenden Substanzen (z.B. zwecks Nuancen-Veränderung).

h) In Spinnbadpräparationen, d.h. als Zusätze zu Spinnbädern wie sie zur Gleitfähigkeitsverbesserung für die Weiterverarbeitung von Synthese-Fasern verwendet werden.

Die Verbindungen der eingangs angegebenen Formel lassen sich als Scintillatoren, für verschiedene Zwecke fotografischer Art, wie für die elektrofotografische Reproduktion oder zur Supersensibilisierung verwenden.

Wird das Weißtönverfahren mit anderen Behandlungs- oder Veredlungsmethoden kombiniert, so erfolgt die kombinierte Behandlung vorteilhaft mit Hilfe entsprechender beständiger Präparate. Solche Präparate sind dadurch gekennzeichnet, daß sie weißtönende Verbindungen der eingangs angegebenen allgemeinen Formel sowie Dispergiermittel, Waschmittel, Carrier, Farbstoffe, Pigmente oder Appreturmittel enthalten.

Bei Behandlung von einer Reihe von Fasersubstraten, z.B. von Polyesterfasern, mit den erfindungsgemäßen Weißtönern verfährt man zweckmäßig dergestalt, daß man diese Fasern mit wäßrigen Dispersionen der Weißtöner bei Temperaturen unter 75°C, z.B. bei Raumtemperatur, imprägniert und einer trockenen Wärmebehandlung bei Temperaturen über 100°C unterwirft, wobei es sich im allgemeinen empfiehlt, das Fasermaterial vorher

noch bei mäßig erhöhter Temperatur, z.B. bei mindestens 60°C bis etwa 100°C, zu trocknen. Die Wärmebehandlung im trocknen Zustande erfolgt dann vorteilhaft bei Temperaturen zwischen 120 und 225°C, beispielsweise durch Erwärmen in einer Trockenkammer, durch Bügeln im angegebenen Temperaturintervall oder auch durch Behandeln mit trocknem, überhitzem Wasserdampf. Die Trocknung und trockene Wärmebehandlung können auch unmittelbar nacheinander ausgeführt oder in einen einzigen Arbeitsgang zusammengelegt werden.

Beispiel 1

Zu 25 g Triäthylphosphit tropft man bei 160°C unter Stickstoff 22 g (ca. 80 - 85%ig) 2,5-Bis-(brommethyl)-benzolphosphonsäurediäthylester so zu, daß das entstehende Äthylbromid gleichzeitig abdestilliert und aufgefangen werden kann. Man erhitzt zur Vervollständigung der Reaktion noch 3 Stdn. auf 180°C. Danach destilliert man den Überschuß Triäthylphosphit ab, läßt auf 50°C abkühlen und versetzt mit 100 ml 1 molarer Natriumäthylat-Lösung in Äthanol. Das Reaktionsgemisch wird 1 Stde. bei 50°C verrührt. Bei dieser Temperatur gibt man dann eine Lösung von 10,5 g 4-Cyanobenzaldehyd in 50 ml Dimethylformamid zu und rührt 5 Stdn. bei 60°C. Nach Abkühlen auf 20°C fügt man 6 g Essigsäure hinzu, destilliert den größten Teil der Lösungsmittel im Vakuum ab und gibt den Rückstand auf 500 ml Eiswasser. Der gelbliche Niederschlag wird abgesaugt, mit Wasser gewaschen und getrocknet. Man erhält so 10,1 g (54 % d. Theorie, berechnet auf eingesetzten 4-Cyanobenzaldehyd) Rohprodukt der Formel

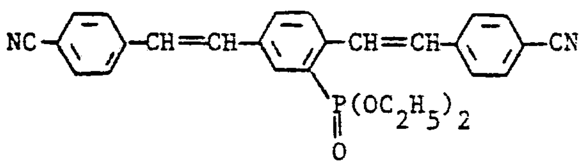

1,

das durch mehrmaliges Umkristallisieren aus Toluol/Ligroin 1/1 gereinigt wird. Die Substanz fluoresziert, in Dimethylformamid gelöst, stark blau und bewirkt, eingearbeitet in Polyäthylenterephthalat, einen starken Weißeffekt mit guten Echtheiten.

Der benutzte 4-Cyanobenzaldehyd wird nach an sich bekannten Methoden (z.B. nach DAS 12 29 061) synthetisiert.

Der verwendete 2,5-Bis-(brommethyl)-benzolphosphonsäurediäthylester der Formel

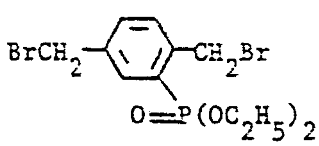

2

wird auf folgende Weise hergestellt:

Zu einer Suspension von 10,9 g (0,05 Mol) wasserfreiem Nickel-(II)-bromid in 277,5 g 2'-Brom-1,4-dimethylbenzol tropft man bei 160°C unter einer Stickstoffatmosphäre innerhalb von 2 Stdn. 498 g Triäthylphosphit. Die Reaktion setzt bereits nach den ersten ml unter heftigem Aufschäumen und blauvioletter Färbung des Reaktionsgemisches ein. Die Zugabegeschwindigkeit wird so eingestellt, daß das Äthylbromid sofort abdestilliert. Das Reaktionsgemisch wird langsam innerhalb von 2 Stdn. auf 200°C erhitzt und bei dieser Temperatur 30 Min. nacherhitzt. Die Destillation im Hochvakuum liefert 230 g (63,4 % der Theorie) 2,5-Dimethylbenzolphosphonsäurediäthylester vom $Kp_{0,2}$ = 107 - 108°C.

22,2 g 2,5-Dimethylbenzolphosphonsäurediäthylester und 0,2 g Dibenzoylperoxid werden in 100 ml Tetrachlorkohlenstoff gelöst und bei 50 - 60°C portionsweise mit einer Mischung aus 42,7 g N-Bromsuccinimid und 0,2 g Azo-bis-isobutyronitril versetzt. Danach rührt man noch 4 Stdn. bei Rückflußtemperatur. Das Succinimid wird abfiltriert, der Filterkuchen mit 100 ml Tetrachlorkohlenstoff gewaschen und das Filtrat im Vak. eingedampft. Das ölige Rohprodukt ist genügend rein und wird ohne Destillation weiter verarbeitet (Ausbeute ca. 90 % d. Th.).

Ebenso erhält man auch das Bisdiäthoxyphosphono-Derivat der Formel:

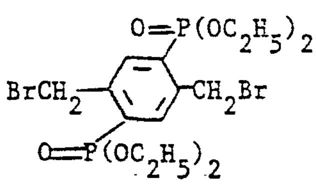

3

Beispiel 2

Analog Beispiel 1 ergibt die Umsetzung von 2,5-Bis-(brommethyl)-benzol-1,4-diphosphonsäuretetraäthylester mit Triäthylphosphit die entsprechende 2,5-Diäthoxyphosphonomethyl-Verbindung und deren weitere Kondensation mit -Cyanobenzaldehyd 17,5 g (82,7 % der Theorie) der Verbindung der Formel:

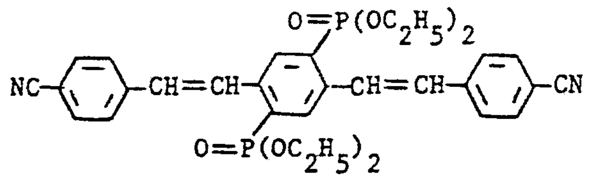

4

als gelbe Kristalle. Sie lassen sich durch Umlösen aus Toluol/Methylcyclohexan unter Zusatz von Bleicherde reinigen.
Fluoreszenz in Dimethylformamid: neutrales Blau.

Beispiel 3

In gleicher Weise wie in Beispiel 1 erhält man aus 22 g (ca. 80 - 85%ig) 2,5-Bis-(brommethyl)-benzolphosphonsäurediäthylester und 10,5 g 2-Cyanobenzaldehyd 12 g (64 % der Theorie) der Verbindung der Formel:

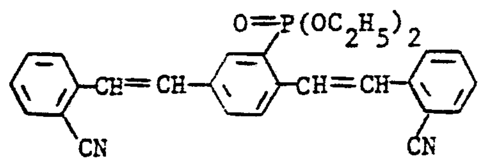

5

in Form hellgelber Kristalle (aus Toluol/Methylcyclohexan gereinigt), deren Lösung in Dimethylformamid eine intensive blauviolette Fluoreszenz zeigt.

Beispiel 4

23,8 g Diphosphonoverbindung der Formel 3 werden bei 160°C unter Stickstoff so zu 23,6 g Triäthylphosphit gegeben, daß das entstehende Äthylbromid gleichmäßig abdestilliert. Man erhitzt zur Vervollständigung der Reaktion noch 4 Stdn. bei 180°C. Danach wird der Überschuß an Triäthylphosphit im Vakuum abdestilliert. Zum Rückstand gibt man 120 ml 1 molare Natriumäthylat-Lösung und verrührt 2 Stdn. bei 40 - 50°C. Bei dieser Temperatur wird das Gemisch mit einer Lösung von 9,85 g 4-Chlorbenzaldehyd in 50 ml Dimethylformamid versetzt. Es wird 5 Stdn. bei 50 - 60°C gerührt und mit Essigsäure neutralisiert. Die Lösungsmittel werden im Vakuum entfernt. Zum Rückstand gibt man 300 ml Wasser und

extrahiert dreimal mit 100 ml Chloroform. Nach dem Trocknen über wasserfreiem Natriumsulfat wird das Lösungsmittel im Vakuum abdestilliert und das zum Teil ölige Produkt mit 400 ml Di-isopropyläther behandelt. Man erhält so 12,5 g (57,3 % d. Theorie) hellgelbe Kristalle der Verbindung der Formel

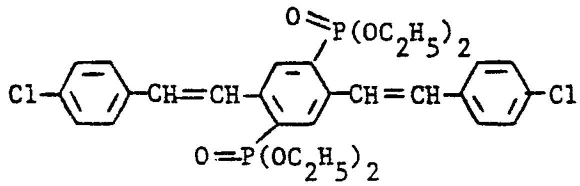
6,

die, aus Cyclohexan umkristallisiert, eine starke rotstichig blaue Fluoreszenz in Dimethylformamid zeigen.

Beispiel 5

12,5 g der Verbindung der Formel 6 werden mit 40 ml konz. Salzsäure in 200 ml Dioxan 5 Stdn. am Rückfluß erhitzt. Es wird abgekühlt und die hellgelben Kristalle werden abfiltriert. Man erhält 8,2 g (72 % der Theorie) der Verbindung der Formel

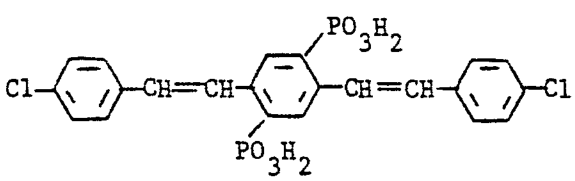
7,

die durch Lösen in 10%iger Natronlauge und Klären mit A-Kohle gereinigt werden. Aus dem Filtrat erhält man durch Ansäuern mit Salzsäure die reine Diphosphonsäure der Formel 7. Als Tetranatriumsalz ist die Verbindung in Wasser gut löslich und zeigt darin eine sehr starke blauviolette Fluoreszenz.

Die Umsetzung mit 5 g Natronlauge in Methylglykol (10 Stdn. Rückfluß) führt zum Dinatriumsalz der Formel:

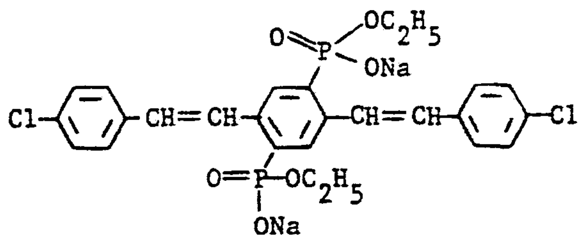
8,

das - in Wasser gelöst - ebenfalls eine sehr starke blauviolette Fluoreszenz zeigt.

Beipiel 6

22 g (ca. 80 - 85%ig) 2,5-Bis-(brommethyl)-benzolphosphonsäurediäthylester werden bei 160°C unter Stickstoff mit 25 g Triäthylphosphit gemäß Beispiel 1 umgesetzt. Nach dem Abdestillieren des überschüssigen Triäthylphosphits wird der Rückstand mit 110 ml 1 molarer Natriumäthylatlösung behandelt. Danach wird eine Lösung aus 20,1 g (82,8 %ig) benzaldehyd-2-sulfonsaurem Natrium in 150 ml Dimethylformamid zugetropft und 5 Stdn. bei 50 - 60°C gerührt. Die Reaktionsmischung wird mit Essigsäure neutralisiert und im Vakuum werden die Lösungsmittel entfernt. Der ölige Rückstand wird über eine Säule - gefüllt mit schwach bas. $Al_2O_3$ (Akt. I; Laufmittel: Methanol) - chromatographiert. Man erhält 13 g (52,2 % der Theorie) reine Verbindung der Formel

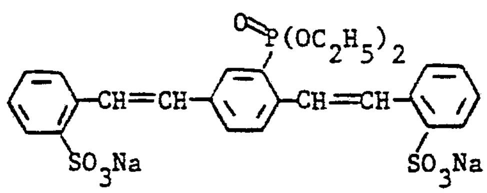
9

als gelbe Kristalle, die - in Wasser gelöst - eine starke blauviolette Fluoreszenz zeigen.

Beispiel 7

In analoger Weise erhält man aus 2,5-Bis-(brommethyl)-benzol-1,4-diphosphonsäuretetraäthylester mit Triäthylphosphit nach anschließender Kondensation mit benzaldehyd-2-sulfonsaurem Natrium 15 g (49 % der Theorie) der Verbindung der Formel:

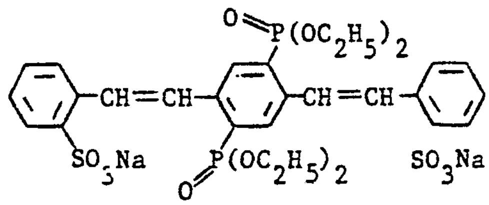

10

als gelbe Kristalle, die - in Wasser gelöst - stark blau fluoreszieren.

Beispiel 8

35 g (ca. 80%ig) 2,5-Bis-(diphenylphosphinyl)-1,4-bis-(brommethyl)-benzol (hergestellt gemäß Beispiel 1 aus Diphenylphosphinigsäuremethylester und 2,5-Dibrom-1,4-dimethylbenzol und nachfolgende Bromierung mit N-Bromsuccinimid) werden mit 25 g Triäthylphosphit 4 Stdn. bei 160-180°C unter Abdestillieren des entstehenden Äthylbromids umgesetzt. Nach Entfernen des überschüssigen Triäthylphosphits im Vakuum wird der Rückstand mit 110 ml 1 molarer Natriumäthylatlösung 2 Stdn. bei 50°C behandelt. Zur Suspension tropft man eine Lösung aus 11,2 g Benzaldehyd in 100 ml Dimethylformamid und rührt 5 Stdn. bei 50 - 60°C. Die Reaktionsmischung wird mit der entsprechenden Menge Essigsäure neutralisiert. Die Lösungsmittel werden im Vakuum entfernt. Zum Rückstand gibt man 200 ml Eiswasser, extrahiert dreimal mit je 100 ml Chloroform, trocknet die organische Phase über wasserfreiem Natriumsulfat und entfernt das Lösungsmittel im Vakuum. Der zum Teil ölige Rückstand wird mit Di-isopropyläther behandelt und aus Toluol/Methylcyclohexan mit Hilfe von Tonsil umkristallisiert. Man erhält so 13 g (47,6 % der Theorie) gelbliche Kristalle der Verbindung der Formel

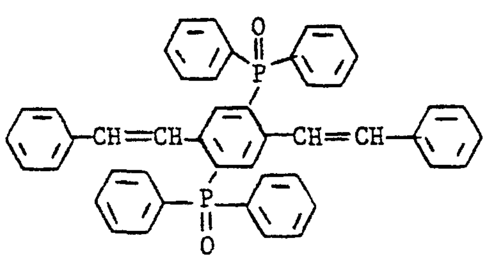

11,

die, in Dimethylformamid gelöst, eine sehr gute blauviolette Fluoreszenz zeigen.

Beispiel 9

In gleicher Weise, wie in den Beispielen 1 bis 8 beschrieben, erhält man die in der nachstehenden Tabelle aufgeführten Verbindungen der allgemeinen Formel

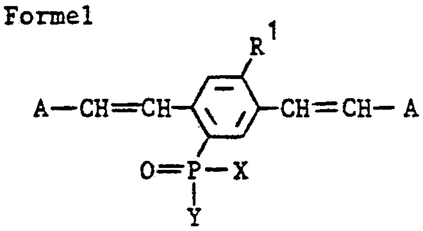 12

Tabelle 1

| Formel Nr. | A | $R^1$ | X | Y | Fluoreszenz in DMF |
|---|---|---|---|---|---|
| 13 | 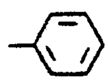 | $-\underset{\overset{\|}{O}}{P}(OC_2H_5)_2$ | $OC_2H_5$ | $OC_2H_5$ | rotviolett |
| 14 | " | $OCH_3$ | $OCH_3$ | $C_6H_5$ | blauviolett |
| 15 | " | " | $C_6H_5$ | " | rötl. blau |
| 16 | 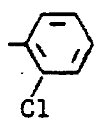 | $-\underset{\overset{\|}{O}}{P}(OC_2H_5)_2$ | $OC_2H_5$ | $OC_2H_5$ | rotviolett |
| 17 | 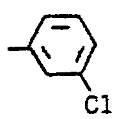 | " | " | " | rotviolett |
| 18 | " | H | $OC_3H_7$-i | $OC_3H_7$-i | rotst. blau |
| 19 | 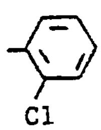 | " | $C_6H_5$ | $C_6H_5$ | rotviolett |
| 20 | 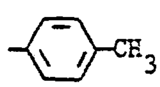 | Cl | $OC_2H_5$ | $OC_2H_5$ | blau |
| 21 | 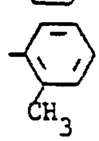 | " | ONa | ONa | blau |

Fortsetzung Tabelle 1

| Formel Nr. | A | $R^1$ | X | Y | Fluoreszenz in DMF |
|---|---|---|---|---|---|
| 22 | 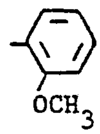 | H | $C_6H_5$ | $OCH_3$ | blau |
| 23 | 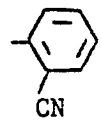 | " | " | " | blauviolett |
| 24 | 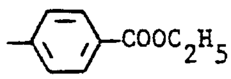 | " | $OC_2H_5$ | $OC_2H_5$ | blauviolett |
| 25 | 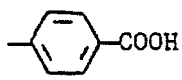 | " | $OC_4H_9$-n | $OC_4H_9$-n | blauviolett |
| 26 | 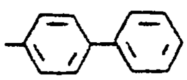 | Cl | $OC_2H_5$ | $OC_2H_5$ | grünst.blau |
| 27 | 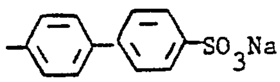 | " | " | " | grünst.blau |
| 28 | 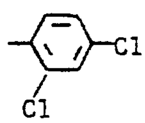 | $PO_3Na$ | ONa | ONa | rotst. blau |
| 29 | 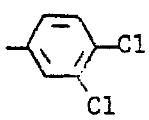 | " | " | " | rotviolett |
| 30 | 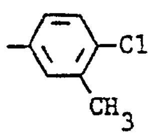 | " | " | " | blau |
| 31 | 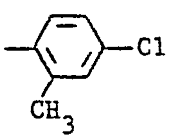 | H | " | $OC_2H_5$ | blau |
| 32 | 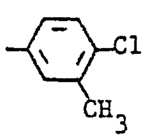 | Cl | $OC_2H_5$ | " | neutr.blau |
| 33 | 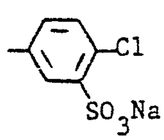 | $-\overset{O}{\overset{\|}{P}}(OC_2H_5)_2$ | " | " | blau |

Fortsetzung Tabelle 1

| Formel Nr. | A | $R^1$ | X | Y | Fluoreszenz in DMF |
|---|---|---|---|---|---|
| 34 | 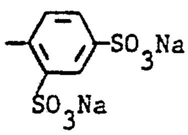 | H | $C_6H_5$ | $C_6H_5$ | blau |

Patentansprüche

Anspruch 1

1,4-Distyrylbenzolderivate der Formel

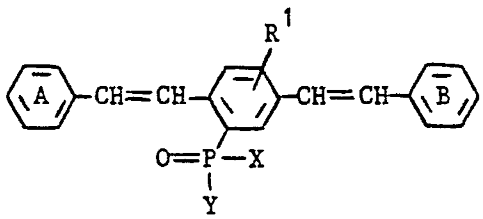

worin

$R^1$ für Wasserstoff, Halogen, Alkyl, Alkoxy oder einen Rest der Formel

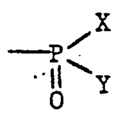

steht und

X und Y unabhängig voneinander Halogen, gegebenenfalls substituiertes Alkyl, Aryl, Aralkyl, Hydroxy, Alkoxy, Aralkoxy, Cycloalkoxy, Aryloxy, Amino, Mono- oder Dialkylamino, Aralkylamino, Acylamino-Arylamino, Cycloalkylamino, Morpholino, Piperidino oder Pyrrolidino bedeuten

und wobei die cyclischen und acyclischen Reste sowie die Ringe A und B für Weißtöner übliche, nichtchromophore Substituenten tragen und die Phosphonsäure bzw. Phosphinsäuregruppen auch als Salze vorliegen können.

Anspruch 2

1,4-Distyrylbenzolderivate der Formel

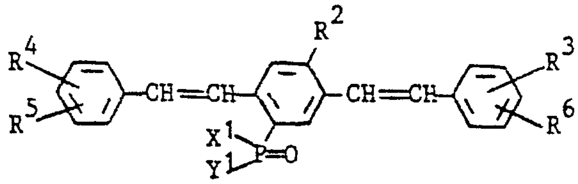

worin

$R^2$ Wasserstoff, Chlor, $C_1$- bis $C_4$-Alkyl, $C_1$- bis $C_4$-Alkoxy oder einen Rest der Formel

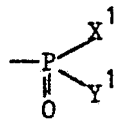

$R^3$ und $R^4$ unabhängig voneinander Wasserstoff, Chlor, $C_1$- bis $C_4$-Alkyl, Sulfo, Carboxy, $C_1$- bis $C_4$-Alkoxy oder Cyano,

$R^5$ und $R^6$ unabhängig voneinander Wasserstoff, Chlor, $C_1$- bis $C_4$-Alkyl, gegebenenfalls durch Methyl, Methoxy oder Chlor substituiertes Phenyl, $C_1$- bis $C_4$-Alkoxy, $C_1$- bis $C_4$-Alkoxycarbonyl, $C_1$- bis $C_4$-Alkylsulfonyl, $C_1$- bis $C_4$-Alkylcarbonyl, Hydroxy oder Carboxy,

$X^1$ und $Y^1$ unabhängig voneinander $C_1$- bis $C_4$-Alkyl, Benzyl, gegebenenfalls durch Methyl, Methoxy oder Chlor substituiertes Phenyl, eine Gruppe der Formeln OH oder $OR^7$, oder einen Rest der Formel $-(OCH_2CH_2)_n-OR^7$,

$R^7$ Wasserstoff, $C_1$- bis $C_4$-Alkyl, Benzyl oder Phenyl und

n eine ganze Zahl von 1 bis 7 bedeuten,

wobei die Phosphonsäure- bzw. Phosphinsäuregruppe auch als Salz vorliegen kann.

Anspruch 3

1,4-Distyrylbenzolderivate der Formel

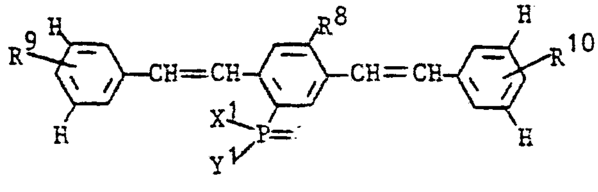

worin

$R^8$ Wasserstoff, Chlor oder einen Rest der Formel 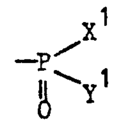

$R^9$ und $R^{10}$ Wasserstoff, Chlor, $C_1$- bis $C_4$-Alkyl, Sulfo, Carboxy, $C_1$- bis $C_4$-Alkoxy, $C_1$- bis $C_4$-Alkoxycarbonyl oder Cyano bedeuten und

$X^1$ und $Y^1$ die in Anspruch 2 angegebene Bedeutung haben.

Anspruch 4

Verfahren zur Herstellung von 1,4-Distyrylbenzolderivaten gemäß Anspruch 1, dadurch gekennzeichnet, daß man die Verbindungen der Formel

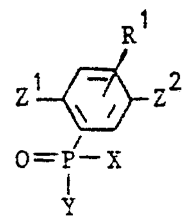

im molaren Verhältnis 1:1:1 mit je einer Verbindung der Formeln

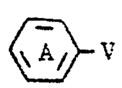 bzw. 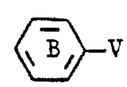

umsetzt, wobei die Symbole $Z^1$,$Z^2$ bzw. V eine Formylgruppe oder eine Gruppierung der Formeln

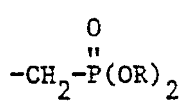

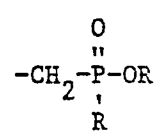

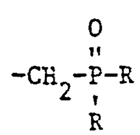

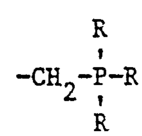

darstellen, worin

R einen $C_1$- bis $C_4$-Alkyl-, einen $C_5$- bis $C_6$-Cycloalkyl- oder einen

gegebenenfalls substituierten Arylrest, vorzugsweise einen Phenylrest, bedeuten.

Anspruch 5

Verfahren gemäß Anspruch 4, dadurch gekennzeichnet, daß man die Reaktion in organischen Lösungsmitteln und in Gegenwart basischer Kondensationsmittel ausführt.

Anspruch 6

Verwendung der Verbindungen gemäß Ansprüchen 1 bis 3 zum Weißtönen von synthetischen, halbsynthetischen und natürlichen organischen hochmolekularen Materialien.

Anspruch 7

Verfahren zur Erzeugung einer kohärenten Laseremission in einem Wellenlängenbereich von 400 bis 480 nm unter Verwendung von 1,4-Distyrylbenzolderivaten gemäß der Ansprüche 1 bis 3.

0014307

Nummer der Anmeldung

Europäisches Patentamt

# EUROPÄISCHER RECHERCHENBERICHT

EP 80 10 0027

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | GB - A - 1 350 326 (CIBA-GEIGY)<br>* Anspruch 6 *<br>-- | 4 | C 07 F 9/40<br>C 07 F 9/32<br>C 07 F 9/38 |
| | DE - A1 - 2 535 102 (NIPPON KAYAKU)<br>* Anspruch 15 *<br>-- | 6 | C 07 F 9/53<br>H 01 S 3/20<br>D 06 L 3/12 |
| P | EP - A1 - 0 003 784 (BAYER)<br>* Ansprüche 4, 5, 7, 8 *<br>---- | 4-7 | |

RECHERCHIERTE SACHGEBIETE (Int. Cl.3)

C 07 F 9/00
D 06 L 3/12
H 01 S 3/20

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 07-05-1980 | FROELICH |